(19) Europäisches Patentamt
European Patent Office
Office européen des brevets

(11) Publication number: 0 177 208
A2

(12) # EUROPEAN PATENT APPLICATION

(21) Application number: 85306514.2

(22) Date of filing: 13.09.85

(51) Int. Cl.[4]: C 08 L 67/02
C 08 K 5/12

(30) Priority: 03.10.84 JP 207749/84

(43) Date of publication of application:
09.04.86 Bulletin 86/15

(84) Designated Contracting States:
BE DE FR GB IT NL

(71) Applicant: POLYPLASTICS CO. LTD.
30 Azuchimachi 2-chome
Higashi-ku Osaka-shi(JP)

(72) Inventor: Takahashi, Katsuhiko
324, Miyashita
Fuji-shi Shizuoka(JP)

(72) Inventor: Sugita, Michiyuki
102-1, Nakayoshida
Shizuoka-shi Shizuoka(JP)

(74) Representative: Livsey, Gilbert Charlesworth Norris et al,
HYDE, HEIDE & O'DONNELL 146 Buckingham Palace Road
London SW1W 9TR(GB)

(54) **Resin composition improved in fluidity.**

(57) A resin composition comprises (A) a thermoplastic polyester and (B) an aromatic polybasic acid ester and eventually is improved in fluidity.

EP 0 177 208 A2

Croydon Printing Company Ltd.

# Resin Composition Improved in Fluidity

The present invention relates to a thermoplastic polyester resin composition having an improved fluidity. More particularly, the invention relates to a thermoplastic polyester resin composition having a fluidity improved by adding an aromatic polybasic acid ester thereto without damaging its excellent mechanical properties and flame retardancy so as to make the production of moldings having quite thin walls or complicated shapes possible.

Thermoplastic polyester resins such as polyalkylene terephthalate resins having excellent mechanical and electric properties and moldability have been used widely as engineering plastics. However, they are combustible and when they are used in the production of electric parts, etc., they should be made flame-retardant by adding a flame retarder or a flame retarding assistant thereto. When they are used in a field wherein high mechanical strength and rigidity are required, they are

used in the form of a composition containing a reinforcing filler such as glass fibers.

[Prior Art and Problems]

As small electric and electronic parts of light weights have been developed recently, moldings having quite thin walls or complicated shapes are now increasing in number in these fields. When a thermoplastic polyester resin composition having a low fluidity is injection-molded to form said moldings, a phenomenon of insufficient filling occurs to make the molding difficult. Under these circumstances, the improvement of the fluidity has been demanded.

For the improvement of the fluidity, the following processes (1) to (3) have been employed in the prior art:

(1) elevation of the molding temperature,

(2) use of a base polymer having a low degree of polymerization, and

(3) addition of a lubricant.

However, the process (1) is limited by the amount of the filler used and when the molding temperature is elevated excessively, the base polymer is thermally decomposed to damage the physical properties. In the process (2), the inherent, excellent mechanical properties are sacrificed. The process (3) has problems that the melt stability is reduced seriously and a large

amount of the lubricant is required for obtaining a desired fluidity and, consequently, the extrudability and moldability are damaged.

[Means of solving the Problems]

The inventors have found an agent capable of improving the fluidity of the resin composition without damaging excellent physical properties such as mechanical, thermal and electric properties and flame retardancy thereof. The present invention has been completed on the basis of this finding.

The present invention relates to a resin composition having an improved fluidity comprising a thermoplastic polyester resin containing an aromatic polybasic acid ester as a fluidity improver.

The term "thermoplastic polyester resins" herein refers to aromatic polyesters comprising mainly an aromatic dicarboxylic acid and a diol or a hydroxycarboxylic acid. The aromatic dicarboxylic acids used herein are difunctional carboxylic acids such as terephthalic, isophthalic, 2-methylterephthalic, 4-methylterephthalic, naphthalenedicarboxylic and diphenyldicarboxylic acids. They may be used either alone or in the form of a mixture of two or more of them. Terephthalic acid is particularly preferred.

Examples of the diols include aliphatic glycols

such as ethylene, propylene, trimethylene, tetramethylene, and neopentyl glycols. They may be used either alone or in the form of a mixture of two or more of them. Particularly, ethylene and tetramethylene glycols are preferred. In addition, aromatic dihydroxy compounds such as 2,2-bis(4-hydroxyphenyl)propane may also be used.

Examples of the hydroxycarboxylic acids include hydroxybenzoic acid and hydroxynaphthoic acid.

Particularly preferred thermoplastic polyester resins are polyethylene terephthalate, polytetramethylene terephthalate and their copolymers and mixtures.

Further, thermoplastic fully aromatic polyester resins comprising one or more aromatic hydroxycarboxylic acids and copolymers and mixtures of them may also be used.

The fluidity improvers used in the present invention are aromatic polybasic acid esters. Particularly, aromatic polybasic acid esters of the following general formula (1) are preferred:

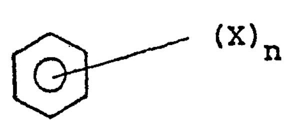

..... (1)

wherein X represents -COOR (R being an alkyl group having 1 to 12 carbon atoms), *n* represents

an integer of 2 to 6 and the alkyl groups R in X may be the same as or different from one another.

The number of carbon atoms in the alkyl group R is preferably 7 to 9, since as the number of carbon atoms in the alkyl group is increased, the processability and plasticization efficiency of the compound of the general formula (1) are reduced, though the volatility thereof is reduced and aging resistance, durability and low-temperature resistance thereof are improved. On the other hand, as the number n is increased, the heat resistance is improved but n is preferably 3 or 4 from the viewpoint of physical properties and processability.

For resins which require a relatively high processing temperature such as polytetramethylene terephthalate, compounds in which n is 3 or 4 are particularly suitable among those of the general formula (1).

The amount of the aromatic polybasic acid ester is 0.5 to 10 wt. %, preferably 1 to 3 wt. %, based on the total composition. Thus, a sufficient effect can be exhibited with even only a small amount of said ester. With less than 0.5 wt. % of this ester, no sufficient effect can be exhibited and when the amount thereof exceeds 10 wt. %, the mechanical properties and flame retardancy might be damaged.

According to the present invention, the aromatic polybasic acid ester may be added to a flame-retardant thermoplastic polyester resin composition comprising the above-mentioned thermoplastic polyester resin, a flame retardant and a flame-retarding assistant to improve the fluidity thereof.

The flame retardants used in the present invention are usual organic halogen compounds and phosphorus compounds. Particularly preferred are aromatic bromine compounds. Examples of them include low-molecular bromine compounds such as diphenyl ether substituted with 5 to 10 bromine atoms and ethylene glycol diphenyl ether in which hydrogen atoms in the aromatic rings are replaced with 5 to 10 bromine atoms; bromine-substituted derivatives of monomers such as aromatic carbonates derived from bisphenol A, etc. and epoxy compounds and polymers of them; brominated polystyrene oligomers; and brominated cyanurates.

These flame retardants may be used either alone or in the form of a mixture of two or more of them.

The flame retardant is used preferably in an as small as possible amount, since the mechanical properties of the composition are damaged when it is used in a large amount. The amount is generally 1 to 30 wt. %, preferably 2 to 20 wt. %, based on the total composition.

The flame retarding assistants used in the present invention include metal oxides and hydroxides such as antimony trioxide, antimony halides, aluminum hydroxide and magnesium hydroxide. They are used in an amount of 0.5 to 15 wt. %, preferably 1 to 10 wt. %, based on the total composition.

A reinforcing filler may be incorporated in the composition according to the present invention. Examples of the reinforcing fillers include fibrous ones such as inorganic fibers, e.g., glass fibers, carbon fibers, graphite fibers, metal fibers, silicon carbide fibers, asbestos, wollastonite and fibrous potassium titanate, as well as whiskers and various organic fibers; platy reinforcing fillers such as micas (including muscovite, phlogopite and sericite), platy glass (glass flakes), talc and metal foils; and granular fillers such as glass beads, calcium carbonate, quartz powder, silica, magnesium carbonate, calcium sulfate, clay, diatomaceous earth, alumina, siliceous sand, glass powder, metal particles and graphite. These reinforcing fillers may be used either alone or in the form of a mixture of two or more of them.

These reinforcing fillers are used for various purposes such as improvement of the mechanical properties, imparting of electroconductivity, prevention of deformation and improvement of frictional properties and flame retardancy. Though the total amount of these reinforcing fillers are not particularly limited, the practical upper limit is around 60 wt. %, preferably 0.5 to 50 wt. %.

When the above-mentioned reinforcing fillers are surface-treated with a suitable surface-treating agent before the use, the mechanical strength of the composition is further increased. Various known surface-treating agents based on, for example, silane or titanate are usable according to the present invention.

Further, known additives may be added to the composition of the present invention so as to realize desired properties depending on the use thereof. Examples of the additives include lubricants, nucleating agents, releasing agents, antistatics, other surfactants, plasticizers, pigments, dyes, thermal stabilizers, U.V. stabilizers and organic polymers such as the abovementioned polycarbonates, low molecular weight polyethylene, polypropylene, polyurethane, fluororesin, ethylene/vinyl acetate copolymer, ethylene/alkyl acrylate copolymers, styrene/butadiene/acrylonitrile copolymer, vinyl compounds and copolymers of them such as styrene/acrylonitrile copolymers, polyphase graft copolymers comprising polyacrylate resin and

thermoplastic segment copolyesters. They may be used either alone or in the form of a mixture of two or more of them.

The composition of the present invention may be prepared easily by a known process generally employed in the preparation of a resin composition in the prior art. For example, the composition is prepared by a process wherein the components are mixed together, the mixture is kneaded and extruded through an extruder to form pellets and the pellets are molded; a process wherein pellets having different compositions are prepared and they are mixed together in given amounts and the mixture is molded to obtain moldings having an intended composition, or a process wherein the starting materials are directly fed in a molding machine.

[Examples]

The following examples will further illustrate the present invention, which by no means limit the invention.

The physical properties shown in the following examples were determined as follows:

1) Determination of the fluidity:

The pellets of the composition of the present invention were molded into test pieces having a width of 5 mm and a thickness of 0.3 mm with a thin-walled, bar-flow mold in a molding machine under the following

conditions:

| | |
|---|---|
| cylinder temperature: | 240°C |
| injection pressure: | 1000 $kg/cm^2$ |
| mold temperature: | 60°C |

The fluidity was evaluated from the flow length.

2) Intrinsic viscosity:

The intrinsic viscosity of an 8 % solution in o-chlorophenol was measured.

Examples 1 and 2 and Comparative Examples 1 and 2

Polytetramethylene terephthalate having an intrinsic viscosity of 1.0 was mixed with additives in amounts shown in Table 1. The mixture was shaped into pellets with a vented extruder of 40 mmø to obtain a composition of the present invention.

Then, the pellets were shaped into test pieces and the fluidity, mechanical properties and flame retardancy of them were examined.

In a comparative example, an aromatic polybasic acid ester-free composition was prepared and the properties thereof were examined.

The results are shown in Table 1.

Table 1

| Additive/physical properties | Unit | | Ex. 1 | Ex. 2 | Comp. Ex. 1 | Comp. Ex. 2 |
|---|---|---|---|---|---|---|
| Polytetramethylene terephthalate[*1] | wt.% | | 79.0 | 99.0 | 80.0 | 100 |
| Tri(2-ethylhexyl) trimellitate | " | | 1.0 | 1.0 | - | - |
| Flame retardant (brominated polycarbonate) | " | | 20.8 | - | 20.8 | - |
| Antimony trioxide | " | | 5.2 | - | 5.2 | - |
| Bar-flow flow length | | mm | 14.4 | 19.2 | 11.7 | 15.3 |
| Tensile strength | ASTM D-638 | $kg/cm^2$ | 560 | 530 | 567 | 535 |
| Tensile elongation | ASTM D-638 | % | 35 | 300 up | 34 | 300 up |
| Impact value (unnotched) | ASTM D-256 | kg.cm/cm | 58 | not broken | 59 | not broken |
| Combustibility | UL-94 | | V-O | HB | V-O | HB |

(Note) *1: polytetramethylene terephthalate having an intrinsic viscosity of 1.0.

Examples 3 to 9 and Comparative Examples 3 to 7

Polytetramethylene terephthalate having an intrinsic viscosity of 0.8 was mixed with additives in amounts shown in Table 2 and the properties of the product were examined in the same manner as in Example 1.

In comparative examples, an aromatic polybasic acid ester-free composition was prepared and the properties thereof were examined in the same manner as above.

The results are shown in Table 2.

Table 2

| Additive/physical properties | Unit | | Examples | | | | | | | Comparative Examples | | | | |
|---|---|---|---|---|---|---|---|---|---|---|---|---|---|---|
| | | | 3 | 4 | 5 | 6 | 7 | 8 | 9 | 3 | 4 | 5 | 6 | 7 |
| Polytetramethylene terephthalate *2 | | wt.% | 54.4 | 54.4 | 54.4 | 49.1 | 51.7 | 38.3 | 44.9 | 56.4 | 52.1 | 53.7 | 40.3 | 46.9 |
| Butyl benzyl phthalate | | " | 2.0 | - | - | - | - | - | - | - | - | - | - | - |
| Tri(2-ethylhexyl) trimellitate | | " | - | 2.0 | - | 3.0 | 2.0 | 2.0 | 2.0 | - | - | - | - | - |
| Tetra(2-ethylhexyl) pyromellitate | | " | - | - | 2.0 | - | - | - | - | - | - | - | - | - |
| Glass fibers | | " | 15.0 | 15.0 | 15.0 | 30.0 | 30.0 | - | - | 15.0 | 30.0 | 30.0 | - | - |
| Mica | | " | - | - | - | - | - | 40.0 | - | - | - | - | 40.0 | - |
| Potassium titanate fibers | | " | - | - | - | - | - | - | 30.0 | - | - | - | - | 30.0 |
| Asbestos | | " | 5.2 | 5.2 | 5.2 | 3.9 | 3.9 | 3.9 | 3.9 | 5.2 | 3.9 | 3.9 | 3.9 | 3.9 |
| Antimony trioxide | | " | 9.1 | 9.1 | 9.1 | 5.5 | 5.9 | 6.2 | 7.2 | 9.1 | 5.5 | 5.9 | 6.2 | 7.2 |
| Flame retardant (brominated polycarbonate) | | " | 14.3 | 14.3 | 14.3 | 8.5 | - | 9.6 | 12.0 | 14.3 | 8.5 | - | 9.6 | 12.0 |
| Decabromodiphenyl ether | | " | - | - | - | - | 6.5 | - | - | - | - | 6.5 | - | - |
| Bar-flow flow length | | mm | 20.1 | 22.9 | 23.4 | 18.8 | 20.8 | 11.2 | 14.2 | 18.1 | 16.0 | 17.0 | 10.2 | 12.3 |
| Tensile strength | ASTM D-638 | $kg/cm^2$ | 1007 | 1035 | 1010 | 1310 | 1290 | 700 | 997 | 1050 | 1340 | 1350 | 750 | 1050 |
| Tensile elongation | ASTM D-638 | % | 2.6 | 2.6 | 2.5 | 2.2 | 2.0 | 0.9 | 1.5 | 2.5 | 2.2 | 2.0 | 0.9 | 1.5 |
| Impact value (unnotched) | ASTM D-256 | kg·cm/cm | 38 | 38 | 39 | 50 | 47 | 21 | 40 | 40 | 55 | 49 | 23 | 42 |
| Combustibility | UL-94 | | V-0 | V-0 | V-0 | V-0 | V-0 | V-0 | V-0 | V-0 | V-0 | V-0 | V-0 | V-0 |

(Note) *2: polytetramethylene terephthalate having an intrinsic viscosity of 0.8.

## CLAIMS

1. A resin composition which comprises (A) a thermoplastic polyester and (B) an aromatic polybasic acid ester.

2. A resin composition as claimed in claim 1, which comprises (A) 90 to 99.5 percent by weight of the thermoplastic polyester and (B) 0.5 to 10 percent by weight of the aromatic polybasic acid ester.

3. A resin composition as claimed in claim 1, in which (A) the thermoplastic polyester is a polyester between an aromatic dicarboxylic acid and a diol.

4. A resin composition as claimed in claim 1, in which (A) the thermoplastic polyester is polytetramethylene terephthalate.

5. A resin composition as claimed in claim 1, in which (B) the aromatic polybasic acid ester has the formula (1):

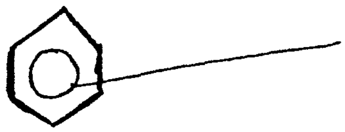 (X)$_n$ .....(1)

wherein X represents -COOR (R being an aklyl group having 1 to 12 carbon atoms), n represents an integer of 2 to 6 and the alkyl groups R in X may be the same as or different from one another.

6. A resin composition as claimed in claim 1, which further comprises (C) a flame retardant.

7. A resin composition as claimed in claim 1, which further comprises (C) 1 to 30 percent by weight of a flame retardant.

8. A resin composition as claimed in claim 1, which further comprises (D) a flame-retarding assistant.

9. A resin composition as claimed in Claim 1, which further comprises (D) 0.5 to 15 percent by weight of a flame-retarding assistant.

10. A resin composition as claimed in claim 1, which further comprises (E) up to 60 percent by weight of a reinforcing filler.